(19) Europäisches Patentamt European Patent Office Office européen des brevets

(11) **EP 4 351 940 B1**

(12) **EUROPÄISCHE PATENTSCHRIFT**

(45) Veröffentlichungstag und Bekanntmachung des Hinweises auf die Patenterteilung:
**24.12.2025 Patentblatt 2025/52**

(21) Anmeldenummer: **22733912.4**

(22) Anmeldetag: **07.06.2022**

(51) Internationale Patentklassifikation (IPC):
**B60T 8/17** *(2006.01)*  **B60T 17/22** *(2006.01)*

(52) Gemeinsame Patentklassifikation (CPC):
**B60T 17/221; B60T 8/171; B60T 8/321;**
B60T 2210/12; B60T 2240/06

(86) Internationale Anmeldenummer:
**PCT/EP2022/065317**

(87) Internationale Veröffentlichungsnummer:
**WO 2022/258567 (15.12.2022 Gazette 2022/50)**

(54) **KRAFTFAHRZEUG UND VERFAHREN ZUR ERMITTLUNG EINER REIFENAUFSTANDSKRAFT**

VEHICLE AND METHOD FOR DETECTING A WHEEL LIFTING FORCE

VÉHICULE ET PROCÉDÉ POUR DÉTECTER UNE FORCE DE SOULEVEMENT DE ROUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2021 DE 102021205799**

(43) Veröffentlichungstag der Anmeldung:
**17.04.2024 Patentblatt 2024/16**

(73) Patentinhaber: **Robert Bosch GmbH**
**70442 Stuttgart (DE)**

(72) Erfinder:
• **HUBER, Michael**
**74199 Untergruppenbach (DE)**
• **WEISSENMAYER, Simon**
**74223 Flein (DE)**

(56) Entgegenhaltungen:
**EP-B1- 0 775 902**  **WO-A1-94/21480**
**CN-U- 202 362 319**  **US-A- 5 408 411**
**US-A1- 2003 010 582**  **US-A1- 2019 043 277**
**US-A1- 2020 207 361**

EP 4 351 940 B1

**Beschreibung**

Die vorliegende Erfindung betrifft ein Verfahren zur Ermittlung einer Reifenaufstandskraft eines Kraftfahrzeugs, ein Computerprogramm, welches eingerichtet ist, jeden Schritt des Verfahrens durchzuführen, sowie ein maschinenlesbares Speichermedium, auf welchem das Computerprogramm gespeichert ist. Schließlich betrifft die Erfindung ein elektronisches Steuergerät, welches eingerichtet ist, um das Verfahren durchzuführen.

Stand der Technik

Wenn ein Kraftfahrzeug so stark wie möglich gebremst oder beschleunigt werden soll, dann können seine Antriebsschlupfregelung und sein Antiblockiersystem dafür sorgen, dass die Antriebskraft und Bremskraft nicht so groß gewählt werden, dass die Räder des Kraftfahrzeugs durchdrehen oder blockieren, dass aber unter Erfüllung dieser Bedingung möglichst stark gebremst beziehungsweise beschleunigt wird. Dies gelingt vor allem dann gut, wenn das Kraftfahrzeug über einen trockenen flachen Boden fährt. Bodenunebenheiten und wechselnde Nässezustände der Fahrbahn können allerdings dazu führen, dass die Räder abwechselnd zu stark und zu schwach gebremst beziehungsweise beschleunigt werden. Das kommt daher, dass die konstante maximal mögliche Bremskraft beziehungsweise Vortriebskraft für ein konstant belastetes Rad optimal gewählt werden kann, wo hingegen für ein plötzlich entlastetes Rad diese Kraft zu groß und für ein plötzlich belastetes Rad zu klein ist, weil die jeweils aktuelle Reifenaufstandskraft des Rades nicht bekannt ist. In der DE 10 2015 113 457 A1 werden eine Bremsvorrichtung und ein Bremsverfahren beschrieben, in dem eine Neigungsbewegungssteuerung durchgeführt wird, bei der eine vorbestimmte Bremskraft für eine vorbestimmte Zeit einem Rad zugeführt wird und die Bremskraft schrittweise erhöht wird, wenn das Fahrzeug abrupt bremst und wenn der Neigungskoeffizient größer ist als der vorbestimmte Wert. Dabei ist vorgesehen, dass eine Fahrzeugverzögerung mittels eines in einem Rad des Fahrzeugs vorgesehenen Beschleunigungssensors detektiert wird.
Das Vorsehen eines Beschleunigungssensors in einem Fahrzeugrad zwischen einer Bremsscheibe und einem Federbein wird auch bei der sogenannten Road-Noise-Control eingesetzt. Um nach dem Prinzip der Active-Noise-Cancelation Abrollgeräusche der Räder zu beseitigen, kommen neben Mikrophonen auch die Daten von Beschleunigungssensoren zum Einsatz, um etwa Aussagen über die Entwicklung eines Geräusches treffen und den nötigen Gegenschall möglichst präzise und möglichst schnell berechnen zu können.
In der US 2020/207361 A1 wird ein Verfahren zur Ermittlung einer Reifenaufstandskraft beschrieben, bei dem eine am Rad wirkende vertikale Beschleunigung berücksichtigt wird.

Offenbarung der Erfindung

Ein im erfindungsgemäßen Verfahren angewandter Beschleunigungssensor weist eine Befestigungsachse auf, die eingerichtet ist, um den Beschleunigungssensor entlang der Befestigungsachse mittels einer Schraube an dem Träger zu befestigen. Träger für Beschleunigungssensoren, insbesondere in Kraftfahrzeugen, weisen üblicherweise Bohrungen auf, die für eine vertikale Schraubverbindung zwischen dem Beschleunigungssensor und dem Träger vorgesehen sind. Weiterhin weist der Beschleunigungssensor ein Sensorelement mit mehreren Sensorachsen auf. Das Sensorelement kann insbesondere in einem Sensorgehäuse des Beschleunigungssensors angeordnet sein, welches die Befestigungsachse aufweist. Sensorelemente von Beschleunigungssensoren können insbesondere mit zwei Sensorachsen oder mit drei Sensorachsen ausgeführt sein. Üblicherweise sind die Sensorachsen relativ zur Befestigungsachse so angeordnet, dass eine Sensorachse parallel zur Befestigungsachse verläuft und damit bei Befestigung des Beschleunigungssensors an einem Kraftfahrzeug zum Boden weist, über den das Kraftfahrzeug fährt. Die weitere Sensorachse (bei einem zweiachsigen Sensorelement) oder die weiteren Sensorachsen (bei einem dreiachsigen Sensorelement) verlaufen üblicherweise so orthogonal zu der Befestigungsachse, dass sie in einer Horizontalebene des Kraftfahrzeugs liegen. In dem vorliegend vorgesehenen Beschleunigungssensor ist hingegen vorgesehen, dass eine Linearkombination aller Sensorachsen parallel zu der Befestigungsachse verläuft. Bei einem zweiachsigen Sensorelement bedeutet dies, dass die Sensorachsen jeweils einen Winkel von 45° mit der Befestigungsachse bilden. Bei einem dreiachsigen Sensorelement bilden sie jeweils ein Winkel von ca. 55° mit der Befestigungsachse. Bei Anordnung des Beschleunigungssensors in einem Kraftfahrzeug weist die Sensorachse also in der Art eines Zweibeins oder eines Dreibeins zum Boden hin, über den das Kraftfahrzeug fährt.
Während die Anordnung der Sensorachsen in einem herkömmlichen Beschleunigungssensor optimiert ist, um Beschleunigungen und Verzögerungen des Kraftfahrzeugs zu messen, ermöglicht die vorliegend beschriebene Anordnung der Sensorachsen eine optimale Messung einer Beschleunigung des Kraftfahrzeugs in Richtung des Bodens, wie sie bei einer plötzlichen Belastung und Entlastung eines Rades auftritt. Auch wenn die Ermittlung einer Beschleunigung in Bodenrichtung grundsätzlich mit einem Beschleunigungssensor mit herkömmlicher Anordnung der Sensorachsen möglich ist, weist die vorliegend beschriebene Anordnung der Sensorachsen jedoch für diese Anwendung Vorteile zur Erkennung eines Fehlerfalls und bei der Offset-Kompensation auf.

Das Kraftfahrzeug weist mindestens einen Beschleunigungssensor auf, der zwischen einem Federbein und einer Bremsscheibe eines Rades des Kraftfahrzeugs angeordnet ist. Dabei weist jeder Beschleunigungssensor ein Sensorelement mit mehreren Sensorachsen auf und eine Linearkombination aller Sensorachsen des Beschleunigungssensors steht orthogonal auf einer Horizontalebene des Kraftfahrzeugs. Dies hat die voranstehend im Zusammenhang mit dem Beschleunigungssensor beschriebenen Vorteile bei der Messung einer Beschleunigung in Bodenrichtung. Es handelt sich deshalb bei dem Beschleunigungssensor vorzugsweise um den voranstehend beschriebenen Beschleunigungssensor.

Die Anordnung des Beschleunigungssensors zwischen einem Federbein und einer Bremsscheibe gewährleistet, dass am Rad in Bodenrichtung wirkende Beschleunigungen mit hinreichender Genauigkeit ermittelt werden. Grundsätzlich reicht es aus Beschleunigungssensoren an den Vorderrädern eines Kraftfahrzeugs anzuordnen. Die Beschleunigung an den hinteren Rädern lässt sich anhand der Beschleunigung der vorderen Räder rekonstruieren, da die hinteren Räder bei gleicher Spurbreite durch dieselben Bodenunebenheiten bewegt werden, wie die vorderen Räder. Daher ist es bevorzugt, dass das Kraftfahrzeug jeweils zwischen einem Federbein und einer Bremsscheibe eines vorderen Rades mindestens einen Beschleunigungssensor aufweist.

Wenn jedoch aus Kostengründen nicht auf Beschleunigungssensoren an den hinteren Rädern verzichtet werden muss, dann ist es bevorzugt, dass das Kraftfahrzeug weiterhin jeweils zwischen einem Federbein und einer Bremsscheibe eines hinteren Rades mindestens einen Beschleunigungssensor aufweist um auf diese Weise Unterschiede zwischen der Beschleunigung in Bodenrichtung an den vorderen Rädern und an den hinteren Rädern erfassen zu können, wenn durch einen Lenkeinschlag die hinteren Räder über andere Bodenunebenheiten bewegt werden, als die vorderen Räder.

Das erfindungsgemäße Verfahren zur Ermittlung einer Reifenaufstandskraft eines Rades eines Kraftfahrzeugs sieht vor, dass bei der Ermittlung zumindest eine Beschleunigung an einem Rad des Kraftfahrzeugs in vertikale Richtung, also in Richtung eines Bodens berücksichtigt wird. Der Boden ist hierbei insbesondere eine Straße beziehungsweise Fahrbahn.

Dies wird dadurch realisiert, dass die Reifenaufstandskraft aus einer Federkraft zwischen dem Boden und dem Rad und einer Dämpfungskraft zwischen dem Boden und dem Rad berechnet wird.

Wenn das Kraftfahrzeug an seinen hinteren Rädern keine Beschleunigungssensoren aufweist, dann ist es bevorzugt, dass eine Beschleunigung an einem hinteren Rad des Kraftfahrzeugs in vertikale Richtung und/oder aus einer Reifenaufstandskraft an einem hinteren Rad des Kraftfahrzeugs aus einer gemessenen Beschleunigung in vertikaler Richtung an einem vorderen Rad des Kraftfahrzeugs und/oder aus einer berechneten Kraft an einem vorderen Rad des Kraftfahrzeugs ermittelt wird. Auf diese Weise ist es auch mit nur wenigen Beschleunigungssensoren möglich, individuelle Reifenaufstandskräfte für alle Räder des Kraftfahrzeugs zu ermitteln.

Die Reifenaufstandskraft wird erfindungsgemäß einer Antriebsschlupfregelung und/oder einem Antiblockiersystem des Kraftfahrzeugs zur Verfügung gestellt. Dadurch kann das maximal mögliche Antriebsmoment und Bremsmoment genau vorgesteuert werden, das Kraftfahrzeug kann präzise stabilisiert werden und es kann stärker gebremst und beschleunigt werden als dies ohne Berücksichtigung der Reifenaufstandskraft möglich wäre.

Es ist weiterhin bevorzugt, dass mittels eines Beschleunigungssensors, der insbesondere an einer Radaufhängung angebracht ist, die Beschleunigung und eine Lautstärke ermittelt werden. Hierzu können aus der Road-Noise-Control bekannte Methoden eingesetzt werden, um in die Reifenaufhängung einkoppelnde Geräusche zu erfassen. Diese Geräusche sind bei gleicher Geschwindigkeit des Kraftfahrzeugs umso lauter je mehr Wasser sich auf dem Boden befindet. Außerdem werden die Geräusche umso lauter je höher das Aquaplaning-Risiko ist und je kleiner der geschwindigkeitsabhängige und nässeabhängige Reibwert zwischen einem Reifen und dem Boden ist. Deshalb ist vorzugsweise vorgesehen, dass aus der Lautstärke der Reibwert zwischen dem Reifen und dem Boden ermittelt wird und der Reibwert ebenfalls der Antriebsschlupfregelung und/oder dem Antiblockiersystem zur Verfügung gestellt wird. Er kann dann zur besseren Berechnung der maximal möglichen Bremskraft oder Antriebskraft herangezogen werden.

Außerdem ist es bevorzugt, dass mittels des Beschleunigungssensors neben der Beschleunigung auch eine Makrorauigkeit des Bodens ermittelt wird. Die Makrorauigkeit, welche beispielsweise bei einem Boden, der aus Kopfsteinpflaster oder Schottersteinen besteht, besonders hoch ist, kann ebenfalls aus Beschleunigungswerten berechnet werden. Es ist bevorzugt, dass die Makrorauigkeit zusammen mit der Reifenaufstandskraft einem ESP-Regelsystem des Kraftfahrzeugs zur Verfügung gestellt wird. Dies ermöglicht eine verbesserte Stabilisierung des Kraftfahrzeugs. Bodenunebenheiten können Einfluss auf das Rollen und Nicken des Kraftfahrzeugs haben. Außerdem können diese beim Bremsen auch Einfluss auf das Gieren des Kraftfahrzeugs haben. Rollbeschleunigungen, Nickbeschleunigungen und Gierbeschleunigungen des Kraftfahrzeugs können bei Bekanntheit der Reifenaufstandskraft und der Makrorauigkeit besser modelliert werden und entsprechende Maßnahmen des ESPs, wie beispielsweise das Bremsen einzelner Räder, gezielter und vorausschauender vorgenommen werden.

Beispielsweise kann es vorgesehen werden, dass die mittels des Verfahrens ermittelten Werte in eine Clouddatenbank übertragen werden. Von dort können sie anderen Kraftfahrzeugen zur Verfügung gestellt werden, um diesen so datenbasierte Unterstützung anzubieten.

Das erfindungsgemäße Computerprogramm ist eingerichtet jeden Schritt des Verfahrens durchzuführen, insbesondere wenn es auf einem Rechengerät oder auf einem elektronischen Steuergerät abläuft. Es ermöglicht die Implementierung unterschiedlicher Ausführungsformen des Verfahrens auf einem elektronischen Steuergerät, ohne hieran bauliche Veränderungen vornehmen zu müssen. Hierzu ist es auf dem maschinenlesbaren Speichermedium gespeichert. Durch Aufspielen des Computerprogramms auf ein herkömmliches elektronisches Steuergerät wird das elektronische Steuergerät erhalten, welches eingerichtet ist, um mittels des Verfahrens eine Reifenaufstandskraft eines Kraftfahrzeugs zu ermitteln.

Kurze Beschreibung der Zeichnungen

Ausführungsbeispiele der Erfindung sind in den Zeichnungen dargestellt und werden in der nachfolgenden Beschreibung näher erläutert.

Figur 1 zeigt schematisch ein Rad eines Kraftfahrzeugs gemäß einem Ausführungsbeispiel der Erfindung.

Figur 2 zeigt eine isometrische Darstellung eines Rades eines Kraftfahrzeugs gemäß einem anderen Ausführungsbeispiel der Erfindung.

Figur 3 zeigt eine schematische Darstellung eines zweiachsigen Beschleunigungssensors gemäß dem Stand der Technik.

Figur 4 zeigt eine schematische Darstellung eines zweiachsigen Beschleunigungssensors gemäß einem Ausführungsbeispiel der Erfindung.

Figur 5 zeigt eine schematische Darstellung eines dreiachsigen Beschleunigungssensors gemäß dem Stand der Technik.

Figur 6 zeigt eine schematische Darstellung eines dreiachsigen Beschleunigungssensors gemäß einem Ausführungsbeispiel der Erfindung.

Figur 7 zeigt ein schematisches Viertelfahrzeugmodell eines Kraftfahrzeugs gemäß einem Ausführungsbeispiel der Erfindung.

Figur 8 zeigt schematisch die Ermittlung mehrerer Werte in einem Verfahren gemäß einem Ausführungsbeispiel der Erfindung.

Ausführungsbeispiele der Erfindung

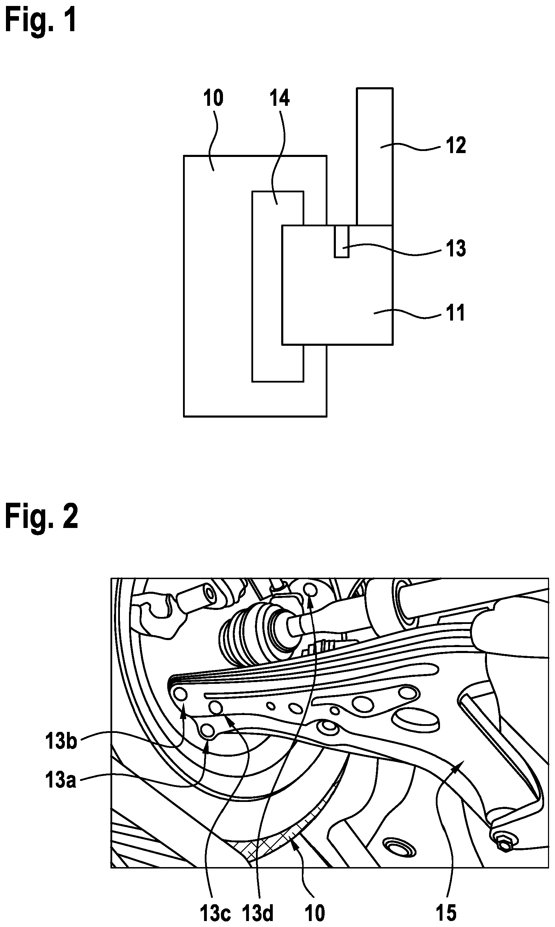

In einem Ausführungsbeispiel eines erfindungsgemäßen Kraftfahrzeugs weist dieses vier Räder auf. Ein Rad 10 ist in Figur 1 dargestellt. Es wird von einem Radträger 11 getragen, der mit einem Federbein 12 eines Stoßdämpfers verbunden ist. In dem Radträger 11 ist eine vertikale Bohrung 13 zwischen dem Federbein 12 und einer Bremsscheibe 14 des Rades 10 angeordnet. Die Bohrung 13 ist zur Befestigung eines Beschleunigungssensors vorgesehen.

Ein Rad 10 eines Kraftfahrzeugs gemäß einem anderen Ausführungsbeispiel der Erfindung ist in Figur 2 dargestellt. An einem Querlenker 15 und nahe des Radträgers 11 sind mehrere Bohrungen 13a bis 13d angeordnet, die jeweils die Befestigung eines Beschleunigungssensors zwischen dem Federbein 12 und der Bremsscheibe 14 ermöglichen.

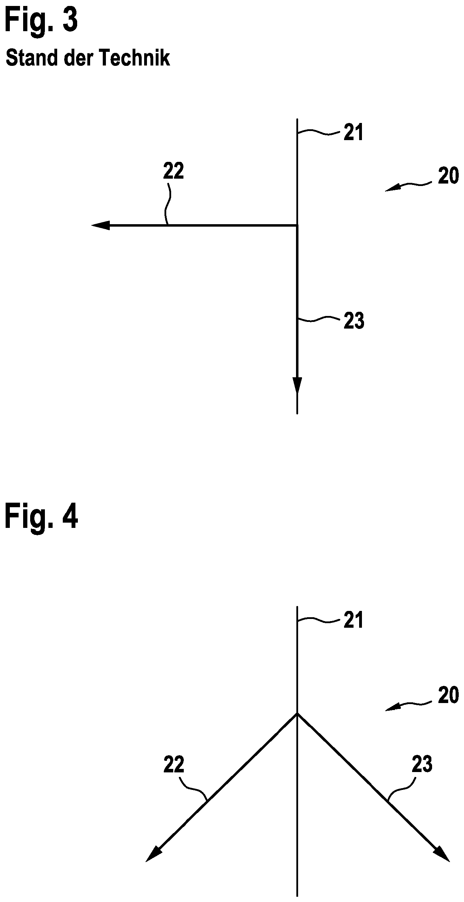

Ein Beschleunigungssensor 20 gemäß dem Stand der Technik ist in Figur 3 dargestellt. In einem nicht dargestellten Sensorgehäuse ist eine Befestigungsachse 21 als durchgehende kreiszylinderförmige Öffnung mit Innengewinde ausgeführt. Sie ermöglicht es, den Beschleunigungssensor 20 mittels einer Schraube, die durch die Befestigungsachse 21 in eine der Öffnungen 13a bis 13d im Radträger geführt wird, in der Nähe des Rades 10 spritzwassergeschützt anzubringen.

Der Beschleunigungssensor 20 gemäß Figur 3 weist zwei Sensorachsen 22, 23 auf, die in einem Winkel von 90° zueinander stehen. Dabei ist die erste Sensorachse 22 dazu vorgesehen, in Fahrtrichtung des Kraftfahrzeugs in seiner Horizontalebene angeordnet zu werden, während die zweite Sensorachse 23 zum Boden, also zur Fahrbahn weist.

Ein erstes Ausführungsbeispiel des im erfindungsgemäßen Verfahren angewandten Beschleunigungssensors ist in Figur 4 dargestellt. Dieser unterscheidet sich vom Beschleunigungssensor gemäß Figur 3 darin, dass die beiden Sensorachsen 22, 23 jeweils einen Winkel von 45° mit der Befestigungsachse 21 bilden und dabei in Art eines Zweibeins zum Boden weisen.

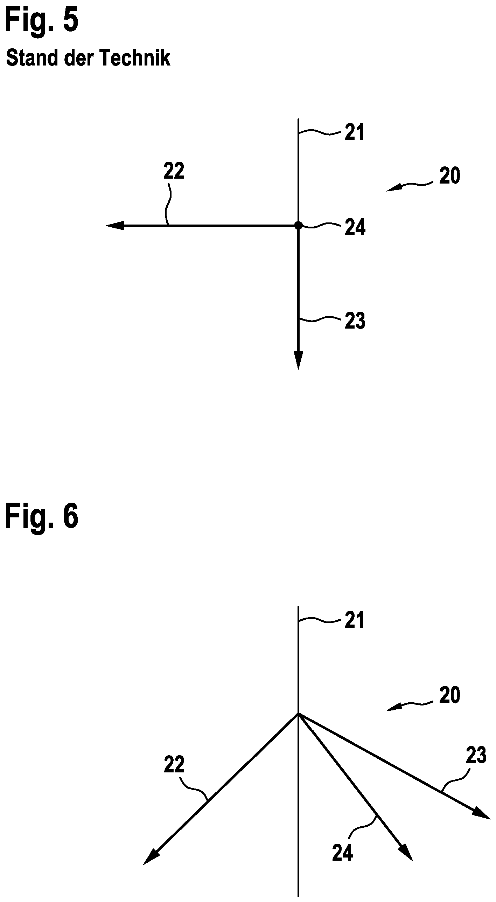

Ein dreiachsiger Beschleunigungssensor gemäß dem Stand der Technik ist in Figur 5 dargestellt. Zusätzlich zu der ersten Sensorachse 22 und der zweiten Sensorachse 23, des zweiachsigen Beschleunigungssensors 20 gemäß Figur 3, weist der dreiachsige Beschleunigungssensor 20 eine dritte Sensorachse 24 auf, die orthogonal auf den beiden weiteren Sensorachsen 22, 23 steht und wie die erste Sensorachse 22 in der Horizontalebene des Kraftfahrzeugs liegt.

Figur 6 zeigt einen dreiachsigen Beschleunigungssensor 20 gemäß einem Ausführungsbeispiel der Erfindung. Seine drei Sensorachsen 22, 23, 24 bilden ebenso wie beim Beschleunigungssensor 20 gemäß dem Stand der Technik jeweils einen Winkel von 90° zu jeder anderen der Sensorachsen 22, 23, 24.

Allerdings weisen die Sensorachsen 22, 23, 24 in der Art eines Dreibeins zum Boden hin, über den das Kraftfahrzeug fährt und bilden dazu mit der Befestigungsachse 21 des Beschleunigungssensors 20 jeweils einen Winkel von 54,74°.

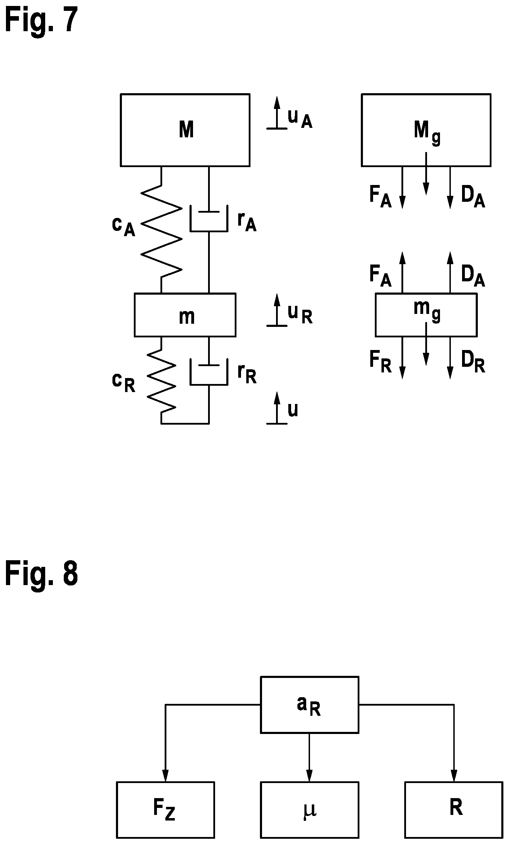

In Figur 7 sind die an einem Rad 10 wirkenden Kräfte und die zu ihrer Berechnung dienenden Werte dargestellt. Dabei handelt es sich um die folgenden Größen:

| | |
|---|---|
| $M$: | Masse der Aufhängung |
| $Mg$: | Gewichtskraft der Aufhängung |
| $m$: | Masse des Rades (10) |
| $mg$: | Gewichtskraft des Rades (10) |
| $g$: | Gravitationskonstante |
| $c_A$: | Federkonstante der Feder zwischen Rad und Aufhängung |
| $c_R$: | Federkonstante des Reifens zwischen Boden und Rad |
| $r_A$: | Dämpfungskonstante des Dämpfers zwischen Rad und Aufhängung |
| $r_R$: | Dämpfungskonstante des Reifens zwischen Boden und Rad |
| $F_A$: | Federkraft zwischen Rad (10) und Aufhängung |
| $F_R$: | Federkraft zwischen Boden und Rad (10) |
| $F_Z$: | Reifenaufstandskraft zwischen Boden und Rad (10) |
| $D_A$: | Dämpfungskraft zwischen Rad (10) und Aufhängung |
| $D_R$: | Dämpfungskraft zwischen Boden und Rad (10) |
| $u$: | Position des Bodens |
| $u_A$: | Position der Aufhängung |
| $u_R$: | Position des Rades |
| $u_{R0}$: | Anfangsposition des Rades |
| $z_A$: | Positionsdifferenz der Aufhängung bezogen auf deren Anfangsposition |
| $z_R$: | Positionsdifferenz des Rades bezogen auf dessen Anfangsposition |
| $a_A$: | Gemessene Beschleunigung an der Aufhängung |
| $a_R$: | Gemessene Beschleunigung am Rad (10) |
| $dt$: | Zeitdauer eines Rechenschritts |

Gemäß dem Schwertpunktsatz gilt die Beziehung in der Matrizendarstellung gemäß Formel 1:

$$\begin{bmatrix} M & 0 \\ 0 & m \end{bmatrix} \begin{Bmatrix} \ddot{z}_A \\ \ddot{z}_R \end{Bmatrix} + \begin{bmatrix} r_A & -r_A \\ -r_A & r_A + r_R \end{bmatrix} \begin{Bmatrix} \dot{z}_A \\ \dot{z}_R \end{Bmatrix} + \begin{bmatrix} c_A & -c_A \\ -c_A & c_A + c_R \end{bmatrix} \begin{Bmatrix} z_A \\ z_R \end{Bmatrix} = \begin{Bmatrix} 0 \\ c_R \cdot u + r_R \cdot \dot{u} \end{Bmatrix}$$

(Formel 1)

Die Reifenaufstandskraft $F_Z$ zwischen dem Boden und einem Rad 10 kann dabei gemäß Formel 2 aus der Federkraft zwischen dem Boden und dem Rad 10 sowie der Dämpfungskraft zwischen dem Boden und dem Rad 10 berechnet werden:

$$F_Z = F_R + D_R$$

(Formel 2)

Die Federkraft $F_R$ zwischen Boden und Rad 10 ergibt sich dabei aus Formel 3:

$$F_R = c_R \cdot (u_R - u)$$

(Formel 3)

Der Wert $u_R$ kann gemäß Formel 4 berechnet werden:

$$u_R = z_R + u_{R0} \qquad \text{(Formel 4)}$$

Die Dämpfungskraft $D_R$ zwischen Boden und Rad 10 ergibt sich gemäß Formel 5:

$$D_R = r_R \cdot (\dot{u}_R - \dot{u}) \qquad \text{(Formel 5)}$$

Der Wert $\dot{u}_R$ berechnet sich dabei gemäß Formel 6:

$$\dot{u}_R = \dot{z}_R \qquad \text{(Formel 6)}$$

Mittels eines Beschleunigungssensors der steif mit der Aufhängung verbunden ist (z.B. eines ESP oder Airbag-Steuergeräts) werden Beschleunigungen und Drehraten gemessen und mittels Koordinatentransformation in eine Beschleunigung $a_A$ an der Position der Aufhängung berechnet und mittels eines Beschleunigungssensors gemäß einem der in Figur 4 oder 6 dargestellten Ausführungsbeispiele in einer der Einbaupositionen gemäß Figur 1 oder 2, wird die Beschleunigung $a_R$ gemessen. Innerhalb eines iterativen Rechenschritts werden die Beschleunigungen $\ddot{z}_A$, $\ddot{z}_R$ in einem ersten Teilschritt gemäß den Formeln 7 und 8 aus den gemessenen Beschleunigungen $a_A$, $a_R$ und der Gravitationsbeschleunigung g in Richtung des Bodens berechnet:

$$\ddot{z}_{A,k} = (a_{A,k} - g) \qquad \text{(Formel 7)}$$

$$\ddot{z}_{R,k} = (a_{R,k} - g) \qquad \text{(Formel 8)}$$

In einem zweiten Teilschritt werden die Geschwindigkeiten $\dot{z}_{A,k}$, $\dot{z}_{R,k}$ und Positionen $z_{A,k}$, $z_{R,k}$ durch diskrete Integration gemäß Formel 8 aus den Geschwindigkeiten $\dot{z}_{A,k-1}$, $\dot{z}_{R,k-1}$ und Positionen $z_{A,k-1}$, $z_{R,k-1}$ des vorhergehenden Rechenschritts und den Beschleunigungen $\ddot{z}_{A,k}$, $\ddot{z}_{A,k}$ berechnet:

$$\begin{Bmatrix} z_{A,k} \\ z_{R,k} \\ \dot{z}_{A,k} \\ \dot{z}_{R,k} \end{Bmatrix} = \begin{bmatrix} 1 & 0 & dt & 0 \\ 0 & 1 & 0 & dt \\ 0 & 0 & 1 & 0 \\ 0 & 0 & 0 & 1 \end{bmatrix} \begin{Bmatrix} z_{A,k-1} \\ z_{R,k-1} \\ \dot{z}_{A,k-1} \\ \dot{z}_{R,k-1} \end{Bmatrix} + \begin{bmatrix} 0 & 0 \\ 0 & 0 \\ dt & 0 \\ 0 & dt \end{bmatrix} \begin{Bmatrix} \ddot{z}_{A,k} \\ \ddot{z}_{R,k} \end{Bmatrix} \qquad \text{(Formel 8)}$$

Die Reifenaufstandskraft $F_Z$ zwischen Boden und Rad 10 wird dann in einem dritten Teilschritt gemäß Formel 9 berechnet:

$$F_Z = [c_A \quad -(c_A + 2c_R) \quad r_A \quad -(r_A + 2r_R)] \begin{Bmatrix} z_{A,k} \\ z_{R,k} \\ \dot{z}_{A,k} \\ \dot{z}_{R,k} \end{Bmatrix} + [0 \quad -m] \begin{Bmatrix} \ddot{z}_{A,k} \\ \ddot{z}_{R,k} \end{Bmatrix} - c_R u_{R0}$$

$$\text{(Formel 9)}$$

In Figur 8 ist dargestellt, dass neben der Reifenaufstandskraft $F_Z$ aus der Beschleunigung $a_R$, die mittels des Beschleunigungssensors 20 gemessen wird, auch noch ein Reibwert $\mu$ zwischen dem Boden und dem Rad 10 sowie eine Makrorauigkeit R des Bodens ermittelt wird. Um mit dem Kraftfahrzeug stärker bremsen und beschleunigen zu können werden die Reifenaufstandskraft $F_Z$ und der Reibwert $\mu$ einer Antriebsschlupfregelung und einem Antiblockiersystem des Kraftfahrzeugs zur Verfügung gestellt und die Reifenaufstandskraft $F_Z$ und Makrorauigkeit R werden außerdem einem ESP-Regelsystem des Kraftfahrzeugs zur Verfügung gestellt.

**Patentansprüche**

1. Verfahren zur Ermittlung einer Reifenaufstandskraft ($F_Z$) eines Rades (10) eines Kraftfahrzeugs, wobei bei der Ermittlung zumindest eine Beschleunigung ($a_R$) an einem Rad (10) des Kraftfahrzeugs in vertikale Richtung berücksichtigt wird, **dadurch gekennzeichnet, dass** die Reifenaufstandskraft ($F_Z$) aus einer Federkraft ($F_R$) zwischen dem Boden und dem Rad (10) und einer Dämpfungskraft ($D_R$) zwischen dem Boden und dem Rad (10) berechnet wird, wobei die Reifenaufstandskraft ($F_R$) einer Antriebsschlupfregelung und/oder einem Antiblockiersystem des Kraftfahrzeugs zur Verfügung gestellt wird.

**2.** Verfahren nach Anspruch 2, **dadurch gekennzeichnet, dass** eine Beschleunigung ($a_R$) in vertikaler Richtung und/oder eine Reifenaufstandskraft ($F_Z$) an einem hinteren Rad (10) des Kraftfahrzeugs aus einer gemessenen Beschleunigung ($a_R$) in vertikaler Richtung und/oder einer berechneten Reifenaufstandskraft ($F_Z$) an einem vorderen Rad (10) des Kraftfahrzeugs ermittelt wird.

**3.** Verfahren nach Anspruch 1, **dadurch gekennzeichnet, dass** mittels eines Beschleunigungssensors (20) die Beschleunigung ($a_R$) und eine Lautstärke ermittelt werden, aus der Lautstärke ein Reibwert ($\mu$) zwischen einem Reifen und dem Boden ermittelt wird und der Reibwert ($\mu$) der Antriebsschlupfregelung und/oder dem Antiblockiersystem zur Verfügung gestellt wird.

**4.** Verfahren nach einem der Ansprüche 1 bis 3, **dadurch gekennzeichnet, dass** mittels eines Beschleunigungssensors (20) die Beschleunigung ($a_R$) und eine Makrorauigkeit (R) des Bodens ermittelt werden und die Makrorauigkeit (R) einem ESP-Regelsystem des Kraftfahrzeugs zur Verfügung gestellt wird.

**5.** Computerprogramm, welches eingerichtet ist, jeden Schritt eines Verfahrens nach einem der Ansprüche 1 bis 4 durchzuführen.

**6.** Maschinenlesbares Speichermedium, auf welchem ein Computerprogramm nach Anspruch 5 gespeichert ist.

**7.** Elektronisches Steuergerät, welches eingerichtet ist, um mittels eines Verfahrens nach einem der Ansprüche 1 bis 4 eine Reifenaufstandskraft ($F_R$) eines Kraftfahrzeugs zu ermitteln.

**Claims**

**1.** Method for determining a tyre contact force ($F_Z$) of a wheel (10) of a motor vehicle, wherein at least an acceleration ($a_R$) on a wheel (10) of the motor vehicle in the vertical direction is taken into consideration in the determination, **characterized in that** the tyre contact force ($F_Z$) is calculated from a spring force ($F_R$) between the ground and the wheel (10) and a damping force ($D_R$) between the ground and the wheel (10), wherein the tyre contact force ($F_R$) is made available to a traction control and/or an anti-lock braking system of the motor vehicle.

**2.** Method according to Claim 2, **characterized in that** an acceleration ($a_R$) in the vertical direction and/or a tyre contact force ($F_Z$) on a rear wheel (10) of the motor vehicle is determined from the measured acceleration ($a_R$) in the vertical direction and/or a calculated tyre contact force ($F_Z$) on a front wheel (10) of the motor vehicle.

**3.** Method according to Claim 1, **characterized in that**, by means of an acceleration sensor (20), the acceleration ($a_R$) and a sound intensity are determined, a friction value ($\mu$) between a tyre and the ground is determined from the sound intensity and the friction value ($\mu$) is made available to the traction control and/or the anti-lock braking system.

**4.** Method according to one of Claims 1 to 3, **characterized in that**, by means of an acceleration sensor (20), the acceleration ($a_R$) and a macroroughness (R) of the ground are determined and the macroroughness (R) is made available to an ESP control system of the motor vehicle.

**5.** Computer program which is designed to carry out each step of the method according to one of Claims 1 to 4.

**6.** Machine-readable storage medium on which a computer program according to Claim 5 is stored.

**7.** Electronic control device which is designed to determine a tyre contact force ($F_R$) of a motor vehicle by means of a method according to one of Claims 1 to 4.

**Revendications**

**1.** Procédé pour déterminer une force de contact au sol d'un pneumatique ($F_Z$) d'une roue (10) d'un véhicule automobile, dans lequel, lors de la détermination, au moins une accélération ($a_R$) sur une roue (10) du véhicule automobile dans la direction verticale est prise en compte, **caractérisé en ce que** la force de contact au sol d'un pneumatique ($F_Z$) est calculée à partir d'une force de ressort ($F_R$) entre le sol et la roue (10) et d'une force d'amortissement ($D_R$) entre le sol et la roue (10), la force de contact au sol d'un pneumatique ($F_Z$) étant fournie à une régulation antipatinage et/ou à un système antiblocage du véhicule automobile.

2. Procédé selon la revendication 2, **caractérisé en ce qu'**une accélération ($a_R$) dans la direction verticale et/ou une force de contact au sol d'un pneumatique ($F_Z$) sur une roue arrière (10) du véhicule automobile est déterminée à partir d'une accélération ($a_R$) mesurée dans la direction verticale et/ou d'une force de contact au sol d'un pneumatique ($F_Z$), calculée sur une roue avant (10) du véhicule automobile.

3. Procédé selon la revendication 1, **caractérisé en ce que** l'accélération ($a_R$) et un volume sonore sont déterminés au moyen d'un capteur d'accélération (20), **en ce qu'**un coefficient de frottement ($\mu$) entre un pneumatique et le sol est déterminé à partir du volume sonore, et **en ce que** le coefficient de frottement ($\mu$) est fourni à une régulation antipatinage et/ou à un système antiblocage.

4. Procédé selon l'une des revendications 1 à 3, **caractérisé en ce que** l'accélération ($a_R$) et une macrorugosité (R) du sol sont déterminées au moyen d'un capteur d'accélération (20), et **en ce que** la macrorugosité (R) est fournie à un système de régulation ESP du véhicule automobile.

5. Programme informatique conçu pour mettre en œuvre chaque étape du procédé selon l'une des revendications 1 à 4.

6. Support de stockage lisible par machine sur lequel est stocké un programme informatique selon la revendication 5.

7. Appareil de commande électronique conçu pour déterminer une force de contact au sol d'un pneumatique ($F_R$) d'un véhicule automobile au moyen d'un procédé selon l'une des revendications 1 à 4.

# Fig. 1

# Fig. 2

**Fig. 3**
Stand der Technik

**Fig. 4**

# Fig. 5
**Stand der Technik**

# Fig. 6

# Fig. 7

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015113457 A1

- US 2020207361 A1